**Europäisches Patentamt**

**European Patent Office**

**Office européen des brevets**

(11) Numéro de publication: **0 370 547 B1**

(12) **FASCICULE DE BREVET EUROPEEN**

(45) Date de publication de fascicule du brevet: **16.03.94**  (51) Int. Cl.5: **C08G 18/63**, C08F 283/06

(21) Numéro de dépôt: **89202748.3**

(22) Date de dépôt: **31.10.89**

(54) **Copolymères préstabilisants et stabilisants greffés, leur préparation, procédé d'obtention de dispersions de polymères-polyols et procédé d'obtention de mousses de polyuréthanne.**

(30) Priorité: **17.11.88 BE 8801308**

(43) Date de publication de la demande:
**30.05.90 Bulletin 90/22**

(45) Mention de la délivrance du brevet:
**16.03.94 Bulletin 94/11**

(84) Etats contractants désignés:
**BE DE ES FR GB IT NL**

(56) Documents cités:
**EP-A- 0 091 036**
**EP-A- 0 262 653**
**US-A- 4 148 840**

(73) Titulaire: **NEW CARBOCHIM S.A.**
**Rue de L'Industrie 8**
**B-1400 Nivelles(BE)**

(72) Inventeur: **Bourguignon, Marc**
**rue Ulysse Ars, 2**
**B-7990 Sirault(BE)**
Inventeur: **Goethals, Etienne**
**Chemin de la Maison du Roi, 16**
**B-1338 Lasne(BE)**
Inventeur: **Masy, Jean-Paul**
**rue du Tombay, 82**
**B-4030 Liège(BE)**
Inventeur: **Jérome, Robert**
**rue des Sorbiers, 6**
**B-4040 Tilff(BE)**
Inventeur: **Teyssie, Philippe**
**Bois du Rognac, 85**
**B-4121 Neuville-en-Condroz(BE)**

(74) Mandataire: **Schmitz, Yvon et al**
**Bureau Gevers S.A.**
**rue de Livourne 7**
**bte 1**
**B-1050 Bruxelles (BE)**

EP 0 370 547 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

**Description**

La présente invention est relative à un procédé de préparation de copolymères préstabilisants greffés en "simple peigne" en solution dans un polyol, à un procédé de préparation de dispersions stables de polymères-polyols contenant un copolymère stabilisant greffé "en double peigne" ainsi qu'à un procédé d'obtention de mousses de polyuréthanne à partir de ces dispersions.

Les polyuréthannes constituent une classe de matières plastiques trouvant des applications très diversifiées, notamment sous forme de mousses souples ou rigides, d'élastomères, de vernis, etc. On les produit par réaction de diisocyanates ou de polyisocyanates avec des composés renfermant des atomes d'hydrogène actifs, généralement des composés polyhydroxylés ou polyols du type polyéthers ou polyesters hydroxylés.

Les caractéristiques physiques et chimiques des polyuréthannes dépendent du choix des réactifs et des conditions de réaction. Dans le cas particulier des mousses souples de polyuréthanne, l'on cherche à obtenir en même temps des caractéristiques de grande dureté et de haute élasticité, c'est-à-dire offrir la "portance" et le confort que réclame l'utilisateur. Les propriétés de portance des mousses souples de polyuréthanne peuvent être améliorées en utilisant dans leur préparation, comme composants polyhydroxylés, des dispersions de polymères-polyols obtenues par polymérisation in situ d'un ou de plusieurs monomères insaturés dans un polyol. La polymérisation in situ des monomères insaturés dans le polyol est effectuée en présence d'un catalyseur à radicaux libres et conduit à la formation d'un mélange de polymères dans le polyol dans lequel une partie du polymère est liée chimiquement au polyol par greffage.

La préparation de ces polymères-polyols et leur utilisation dans la fabrication de polyuréthannes ont fait l'objet de nombreux brevets et divers produits sont commercialisés. On a développé surtout des polymères-polyols préparés par copolymérisation in situ dans un polyol de mélanges d'acrylonitrile et de styrène. L'acrylonitrile possède, en effet, une aptitude marquée au greffage tandis que le styrène a une bonne réactivité vis-à-vis de l'acrylonitrile et possède une bonne efficacité en ce qui concerne l'amélioration des propriétés de portance des mousses. La préparation de polymères-polyols de ce type est décrite par exemple dans les brevets belges n° 788.115 et 818.680 d'Union Carbide Corporation.

L'obtention de dispersions stables de polymères-polyols à base de monomères insaturés, comme l'acrylonitrile et le styrène, présente certaines difficultés. Il est bien connu que l'acrylonitrile, s'il contribue par sa tendance marquée au greffage à la stabilité des dispersions, a cependant l'inconvénient, lorsqu'il est utilisé en quantité majeure, d'être responsable du jaunissement des mousses de polyuréthanne. On peut éviter ce jaunissement en diminuant la quantité d'acrylonitrile par rapport au styrène. Toutefois, la stabilité des dispersions diminue quand on augmente la proportion de styrène par rapport à l'acrylonitrile et il n'est pas possible d'obtenir des dispersions de bonne stabilité en utilisant des quantités élevées de styrène.

Pour résoudre ce problème de la stabilité des dispersions de polymères-polyols tout en évitant le phénomène de jaunissement des mousses de polyuréthanne, différentes solutions ont été proposées, notamment :

- la copolymérisation in situ dans un polyol non saturé en bout de chaînes ou "macromonomère";
- la copolymérisation in situ dans un polyol en présence d'une petite quantité d'un polyol greffé préformé.

Le premier de ces procédés est décrit dans les brevets des Etats-Unis d'Amérique n° 3.823.201, 4.454.255 et 4.458.038 (BASF WYANDOTTE). On y utilise comme polyol non saturé (ou "macromonomère") un produit de réaction d'un polyéther-polyol avec l'acide maléique, l'anhydride maléique et l'acide fumarique. Il se produit, au cours de la copolymérisation in situ d'acrylonitrile et de styrène dans ce polyol, des réactions de copolymérisation entre ces monomères et les groupements insaturés du polyol, ce qui augmente la stabilité des dispersions.

Le second procédé fait l'objet notamment du brevet des Etats-Unis d'Amérique n° 4.148.840 (Union Carbide). On y revendique la préparation de polymères-polyols par polymérisation in situ d'un ou de plusieurs monomères insaturés dans un polyol, de préférence de faible masse moléculaire, en présence d'une petite quantité d'un polymère-polyol préformé. Le polymère-polyol préformé, dont la viscosité ne dépasse pas 40.000 mPa.s à 25°C, est obtenu par polymérisation in situ d'un ou de plusieurs monomères insaturés dans un second polyol, de préférence de masse moléculaire élevée. Ce procédé permet d'obtenir des dispersions stables à teneurs élevées en polymères tout en donnant la possibilité d'augmenter le rapport styrène/acrylonitrile, ce qui réduit le phénomène de jaunissement des mousses.

Ces procédés présentent, toutefois, l'inconvénient de ne pas utiliser de stabilisants extrêmement spécifiques, c'est-à-dire de stabilisants faits sur mesure pour les polyols à renforcer.

C'est ainsi que, suivant la présente invention, on peut préparer des dispersions stables de polymères-polyols en formant, comme stabilisants dans leur préparation, certains copolymères spécifiques greffés en

EP 0 370 547 B1

"double peigne" au départ de copolymères précurseurs renfermant, en distribution statistique, des groupes oxyalkylés et des groupes favorisant le greffage radicalaire.

Un des buts de la présente invention consiste, par conséquent, à remédier aux inconvénients précités par la préparation de copolymères stabilisants greffés en "double peigne" spécifiques ainsi qu'en leur utilisation dans la préparation de dispersions stables de polymères-polyols destinées à la fabrication de polyuréthannes. La spécificité est obtenue par la formation d'un copolymère préstabilisant en "simple peigne" au cours de la synthèse du polyol lui-même; le stabilisant en "double peigne" résulte du greffage de ce copolymère en "simple peigne" lors de la préparation de la dispersion.

A cet effet, on prévoit, suivant la présente invention, un procédé de préparation d'un copolymère préstabilisant greffé en "simple peigne" en solution dans un polyol d'une masse moléculaire de 3000 à 7000, ce procédé étant caractérisé en ce qu'il comprend la copolymérisation in situ d'un mélange de monomères éthyléniquement insaturés renfermant au moins un monomère monoinsaturé exempt de fonctions alcoxylables choisi dans le groupe comprenant le styrène, l'α-méthylstyrène, le méthylstyrène, le 2,4-diméthylstyrène, l'éthylstyrène, l'isopropylstyrène, le butylstyrène, le phénylstyrène, le cyclohexylstyrène, le benzylstyrène, le chlorostyrène, le 2,5-dichlorostyrène, le bromostyrène, le cyanostyrène, le nitrostyrène, le N,N-diméthylaminostyrène, l'acétoxystyrène, le 4-vinylbenzoate de méthyle, le phénoxystyrène, l'acrylonitrile, le méthacrylonitrile, l'acrylate et le méthacrylate de méthyle, de cyclohexyle, de benzyle, d'isopropyle, d'octyle, l'α-chloroacrylate de méthyle, l'α-éthoxyacrylate d'éthyle, l'acrylate et le méthacrylate de butyle, de 2-éthylhexyle, de phényle, l'α-chloroacrylonitrile, le N,N-diméthylacrylamide, le N,N-dibenzylacrylamide, le chlorure de vinylidène, le bromure de vinyle, le chlorure de vinyle, le fluorure de vinyle, le fluorure de vinylidène, l'acétate de vinyle, le chloracétate de vinyle, l'acétate d'isopropényle, le formiate de vinyle, le méthoxyacétate de vinyle, le benzoate de vinyle, l'éther méthylvinylique, l'éther éthylvinylique, l'éther propylvinylique, l'éther butylvinylique, l'éther phénylvinylique, la méthylvinylcétone, la vinylpyridine, l'éthylvinylcétone, la phénylvinylcétone, la N-vinylpyrrolidone, le fumarate de diméthyle et le maléate de diméthyle, et un monomère insaturé à fonction alcoxylable choisi dans le groupe comprenant l'alcool allylique, le 2-butène-1,4-diol, le 3-butène-1,2-diol, l'éther monoallylique de la glycérine, l'éther monoallylique du triméthylolpropane, l'acrylate d'hydroxyéthyle, le méthacrylate d'hydroxyéthyle, l'acrylate d'hydroxypropyle, le méthacrylate d'hydroxypropyle, le monoacrylate et le monométhacrylate de la glycérine, la monoéthanolamine, la diéthanolamine, la triéthanolamine, l'acide acrylique, l'acide méthacrylique, l'acide fumarique, l'acide itaconique, l'acide crotonique, l'anhydride maléique, l'acrylamide, le méthacrylamide, le N-butylacrylamide, l'acrylate de glycidyle, le méthacrylate de glycidyle, l'éther allylglycidique, le monoépoxyde de butadiène et le vinylcyclohexane-3,4-époxyde, ledit mélange renfermant pour 100 moles de monomère monoinsaturé exempt de fonctions alcoxylables de 1 à 20 moles de monomère insaturé à fonction alcoxylable, ladite copolymérisation s'effectuant dans un prépolyol ayant une masse moléculaire inférieure à 5000, à une température de 25°C à 180°C, en présence d'un catalyseur de polymérisation, la proportion pondérale du mélange de monomères étant de 1 à 75 % par rapport au prépolyol, de manière à former un copolymère précurseur insaturé, à fonction alcoxylable en solution dans le prépolyol, et l'alcoxylation dudit copolymère précurseur et du prépolyol au moyen d'un agent d'alcoxylation choisi parmi l'oxyde d'éthylène, l'oxyde de propylène ou un mélange d'oxyde d'éthylène et d'oxyde de propylène, la proportion pondérale d'agent d'alcoxylation par rapport au poids total du mélange soumis à l'alcoxylation étant de 20 à 85 %, à une température de 50°C à 200°C, en présence d'un catalyseur.

Avantageusement, le mélange de monomères renferme au moins un monomère favorisant le greffage radicalaire choisi dans le groupe comprenant le butadiène, l'isoprène, le 1,4-pentadiène, le pipérylène, le 1,4-hexadiène, le 1,7-octadiène, l'acrylate d'allyle, le méthacrylate d'allyle, le diméthacrylate d'éthylène glycol, le diméthacrylate de diéthylène glycol, le diméthacrylate de 1,4-butanediol, le divinylbenzène, l'éther divinylique, le sulfure de divinyle, la divinylsulfone, le N,N-diéthylaminoéthylacrylate, le laurate de vinyle, l'isobutyrate de vinyle, le dodécanate de vinyle, l'hexanoate de vinyle, les bromostyrènes, les α et β-bromostyrènes, le vinylnaphtalène et le vinylanthracène, la proportion pour 100 moles de monomère monoinsaturé exempt de fonctions alcoxylables, étant de 1 à 25 moles de monomère favorisant le greffage radicalaire.

Suivant une forme de réalisation avantageuse de l'invention, la proportion pondérale du mélange de monomères est de l'ordre de 20 à 60 % par rapport au prépolyol.

L'invention concerne également un procédé de préparation d'une dispersion stable de polymère-polyol contenant un copolymère stabilisant greffé en "double peigne".

Ce procédé est caractérisé en ce qu'il comprend la copolymérisation in situ d'au moins un monomère éthyléniquement insaturé choisi dans le groupe comprenant l'isoprène, le butadiène, le 1,4-pentadiène, le styrène, le méthylstyrène, l'α-méthylstyrène, le p-tertiobutylstyrène, l'acrylonitrile, l'acide acrylique, l'acrylate de 2-hydroxyéthyle, le méthacrylate de 2-hydroxyéthyle, l'acrylate et le méthacrylate de benzyle, d'isopropyle, le méthacrylonitrile, l'α-éthoxyacrylate d'éthyle, l'acrylate et le méthacrylate de butyle, de 2-éthylhexyle, de phényle, le N,N-diméthylacrylamide, le N,N-dibenzylacrylamide, le N-butylacrylamide, l'acétate de vinyle, l'alcool vinylique, le butylate de vinyle, l'acrylate et le méthacrylate de vinyle, la méthylvinylcétone, le fumarate de diméthyle, le maléate de diméthyle, l'acide maléique, l'acide fumarique, l'acrylate et le méthacrylate de diméthylaminoéthyle, de glycidyle, l'alcool allylique, la vinylpyridine, la vinylpyrrolidone, le chlorure de vinyle, le bromure de vinyle et le chlorure de vinylidène, dans le polyol, en présence d'un copolymère préstabilisant greffé "en simple peigne" en solution, tel que préparé ci-dessus et d'un amorceur de polymérisation, à une température de 25 à 170°C, la proportion pondérale de solution de copolymère préstabilisant greffé étant de 1 % à 45 % par rapport au poids total de monomère insaturé et de polyol et la proportion pondérale de monomère éthyléniquement insaturé étant de 5 à 60 % par rapport au poids total de solution de copolymère préstabilisant greffé, de polyol et d'amorceur, le monomère insaturé étant, sous l'effet de l'amorceur, polymérisé en particules insolubles et partiellement greffé sur le copolymère préstabilisant en "simple peigne" dans le polyol et produisant un copolymère greffé "en double peigne" assurant la stabilisation de la dispersion ainsi préparée.

Suivant un mode de réalisation avantageux de l'invention, la proportion pondérale de solution de copolymère prévention, stabilisant greffé est de 5 a 30 %.

La présente invention concerne également la préparation de mousses de polyuréthanne préparées au départ de ces dispersions de polymères-polyols, d'eau, de catalyseurs, d'agents tensioactifs et de polyisocyanate.

D'autres détails et particularités de l'inventon ressortiront de la description donnée ci-après à titre d'exemple non limitatif de quelques formes de réalisation particulières de l'invention.

Comme on l'a déjà signalé précédemment, on obtient, suivant l'invention, des copolymères greffés préstabilisants en "simple peigne" par la réaction ou copolymérisation in situ dans un prépolyol de faible masse moléculaire, d'un mélange de monomères éthyléniquement insaturés renfermant au moins un monomère monoinsaturé exempt de fonctions alcoxylables et un monomère insaturé possédant une ou plusieurs fonctions alcoxylables, ainsi qu'éventuellement un monomère favorisant le greffage radicalaire, cette étape étant suivie d'une alcoxylation du mélange de réaction au moyen d'oxyde d'éthylène, d'oxyde de propylène ou d'un mélange de ces composants.

La copolymérisation in situ de ces monomères insaturés dans le prépolyol de faible masse moléculaire, effectuée en présence d'un initiateur classique pour ce type de réaction, comme les amorceurs à radicaux libres, conduit à la formation d'un copolymère précurseur renfermant de l'insaturation et des fonctions alcoxylables en solution dans le polyol. Par alcoxylation en présence d'un catalyseur basique, les fonctions alcoxylables du copolymère sont éthérifiées avec formation du copolymère greffé préstabilisant en "simple peigne" tandis que l'on forme à partir du prépolyol un polyol de masse moléculaire plus élevée telle qu'imposée par les applications ultérieures.

Les copolymères greffés en "simple peigne" ainsi obtenus dans les polyols, lorsqu'on les utilise dans les préparations de dispersions de polymères-polyols, manifestent un effet de stabilité résultant de la présence dans leurs chaînes d'insaturations éthyléniques participant aux réactions de greffage avec formation de copolymère stabilisant greffé en "double peigne". En outre, ces copolymères greffés en "simple peigne" se trouvent en solution dans des polyols dont la masse moléculaire, déterminée par le degré d'alcoxylation du prépolyol de faible masse moléculaire, peut être avantageusement déterminée de façon à ce qu'elle corresponde à celle des polyéthers utilisés couramment dans la fabrication des polyuréthannes.

Suivant la présente invention, on obtient les copolymères préstabilisants greffés en "simple peigne" par copolymérisation des monomères insaturés dans un prépolyol dont la masse moléculaire est inférieure à 5000 et est de préférence comprise entre 500 et 2000. On peut utiliser, à cet égard, n'importe quel prépolyol pouvant maintenir en solution le copolymère précurseur, notamment des glycols, des triols et des polyéthers - polyols, tels que des polyéthylènes glycols et des condensats d'oxyde d'éthylène et/ou d'oxyde d'éthylène et/ou d'oxyde de propylène sur des initiateurs hydroxylés, comme la glycérine, le triméthylolpropane ou d'autres polyols. La quantité de mélange de monomères insaturés utilisée dans la réaction de copolymerisation, en l'absence ou en présence du monomère à double insaturation éthylénique, est de l'ordre de 1 à 75 %, et de préférence de 20 à 60 % par rapport au poids du prépolyol.

Le mélange de monomères éthyléniquement insaturés renferme pour 100 moles de monomère monoinsaturé exempt de fonctions alcoxylables, de préférence 1 à 20 moles de monomère insaturé à fonction alcoxylable, et de préférence 1 à 25 moles de monomère favorisant le greffage radicalaire, si l'on en utilise un.

Comme monomères monoinsaturés exempts de fonctions alcoxylables, on peut utiliser avantageusement le styrène ou des dérivés de styrène, comme l'α-méthylstyrène, le méthylstyrène, le 2,4-diméthylstyrène, l'éthylstyrène, l'isopropylstyrène, le butylstyrène, le phénylstyrène, le cyclohexylstyrène, le benzylstyrène, le chlorostyrène, le 2,5-dichlorostyrène, le bromostyrène, le cyanostyrène, le nitrostyrène, le N,N-diméthylaminostyrène, l'acétoxystyrène, le 4-vinylbenzoate de méthyle, le phénoxystyrène, des monomères acryliques, tels que l'acrylonitrile, le méthacrylonitrile, l'acrylate et le méthacrylate de méthyle, de cyclohexyle, de benzyle, d'isopropyle, d'octyle, l'α-chloroacrylate de méthyle, l'α-éthoxyacrylate d'éthyle, l'acrylate et le méthacrylate de butyle, de 2-éthylhexyle, de phényle, l'α-chloracrylonitrile, le N,N-diméthylacrylamide, le N,N-dibenzylacrylamide, des halogénures de vinyle, tels que le chlorure de vinylidène, le bromure de vinyle, le chlorure de vinyle, le fluorure de vinyle, le fluorure de vinylidène, des éthers vinyliques ou des esters vinyliques, tels que l'acétate de vinyle, le chloracétate de vinyle, l'acétate d'isopropényle, le formiate de vinyle, le méthoxyacétate de vinyle, le benzoate de vinyle, l'éther méthylvinylique, l'éther éthylvinylique, l'éther propylvinylique, l'éther butylvinylique, l'éther phénylvinylique, la méthylvinylcétone, la vinylpyridine, l'éthylvinylcétone, la phénylvinylcétone, la N-vinylpyrrolidone, le fumarate de diméthyle ou le maléate de diméthyle. On peut également utiliser dans le mélange de monomères éthyléniquement insaturés, deux ou plusieurs de ces substances.

Les monomères insaturés à fonction alcoxylable utilisables dans le cadre de la présente invention sont des monomères possédant à la fois un groupement éthyléniquement insaturé et au moins une fonction alcoxylable, c'est-à-dire une fonction capable de réagir au cours de l'étape d'alcoxylation avec l'oxyde d'éthylène, l'oxyde de propylène ou le polyol, en formant des groupements oxyalkylés ou polyoxyalkylés à structure de polyéthers. Ces fonctions alcoxylables peuvent être des groupements à atomes d'hydrogène actif, comme les groupements hydroxyle, amine, amide ou carboxyle. Elles peuvent être constituées également par des groupements anhydride ou époxyde capables de réagir, dans les conditions de l'alcoxylation, avec l'oxyde d'éthylène ou l'oxyde de propylène.

Selon que l'on emploie des monomères contenant des fonctions hydroxyle, anhydride ou époxyde, les greffons de polyéther ont une taille et une structure différentes, l'utilisation de monomères dotés d'une fonction hydroxyle donnant lieu à des greffons linéaires plus courts que le polyol. Leur masse moléculaire moyenne peut être ajustée en fonction de la masse moléculaire du prépolyol et de celle du polyol final :

$$\overline{Mn} \text{ greffons} = \frac{\overline{Mn} \text{ polyol} - \overline{Mn} \text{ prépolyol}}{n} \text{ (n = fonctionnalité du polyol).}$$

Les monomères qui possèdent une fonction anhydride conduisent à des greffons branchés dont la masse moléculaire vaut :

$$\overline{Mn} = \frac{\overline{Mn} \text{ prépolyol} + (n-1) \overline{Mn} \text{ polyol}}{n}$$

tandis que ceux qui contiennent une fonction époxyde fournissent des greffons branchés de même masse moléculaire que le polyol final. Quant au nombre de greffons, il est déterminé par la proportion de ces monomères à fonction alcoxylable.

Parmi ces monomères insaturés à fonction alcoxylable, figurent des alcools ou des polyols insaturés, comme l'alcool allylique, le 2-butène-1,4-diol, le 3-butène-1,2-diol, l'éther monoallylique de la glycérine, l'éther monoallylique du triméthylolpropane, des esters d'acides carboxyliques insaturés avec des glycols ou des polyols, comme l'acrylate d'hydroxyéthyle, le méthacrylate d'hydroxyéthyle, l'acrylate d'hydroxypropyle, le méthacrylate d'hydroxypropyle, le monoacrylate et le monométhacrylate de la glycérine, des esters d'acides carboxyliques insaturés avec des alcools aminés, tels que la monoéthanolamine, la diéthanolamine et la triéthanolamine, des acides carboxyliques insaturés ou des anhydrides d'acides carboxyliques insaturés, comme l'acide acrylique, l'acide méthacrylique, l'acide fumarique, l'acide itaconique, l'acide crotonique, l'anhydride maléique, des amides insaturés, comme l'acrylamide, le méthacrylamide, le N-butylacrylamide, des époxydes non saturés, l'acrylate de glycidyle, le méthacrylate de glycidyle, l'éther allylglycidique, le monoépoxyde de butadiène, le vinylcyclohexane-3,4-époxyde. On peut également, comme dans le cas des monomères insaturés, utiliser deux ou plusieurs de ces substances.

Comme exemples de monomères favorisant le greffage radicalaire utilisables dans la préparation des copolymères greffés stabilisants de la présente invention, on peut citer le butadiène, l'isoprène, le 1,4-pentadiène, le pipérylène, le 1,4-hexadiène, le 1,7-octadiène, l'acrylate d'allyle, le méthacrylate d'allyle, le diméthacrylate d'éthylène glycol, le diméthacrylate de diéthylène glycol, le diméthacrylate du 1,4-butanediol, le divinylbenzène, l'éther divinylique, le sulfure de divinyle, la divinylsulfone, et des monomères à constante de transfert élevée, comme le N,N-diéthylaminoéthylacrylate, le laurate de vinyle, l'isobutyrate de vinyle, le dodécanate de vinyle, l'hexanoate de vinyle, les bromostyrènes, les $\alpha$ et $\beta$-bromostyrènes, le vinylnaphtalène, le vinylanthracène. Comme dans les cas précédents, on peut utiliser des mélanges de deux ou plusieurs de ces substances.

La copolymérisation de ces monomères éthyléniquement insaturés dans le prépolyol de faible masse moléculaire est effectuée à une température d'environ 25 à 180°C, de préférence de 70 à 150°C, en présence d'un catalyseur de polymérisation. On peut utiliser comme catalyseurs de polymérisation, les catalyseurs à radicaux libres, tels que des peroxydes, des persulfates, des perborates, des composés azoïques, etc., qui sont des catalyseurs bien connus pour les polymérisations vinyliques. On peut citer comme exemples de catalyseurs, le peroxyde de dibenzoyle, l'hydroperoxyde de benzoyle, l'hydroperoxyde de t-butyle, le peroxyde de t-butyle, le peroxyde de diisopropyle, l'hydroperoxyde de diisopropylbenzène, l'hydroperoxyde de cumène, le 2,2'-azo-bis-isobutyronitrile, le 2,2'-azo-bis (2,4-diméthylvaléronitrile), le 2-t-butylazo-2-cyano-4-méthylpentane, le 4,4'-azo-bis (4-cyano-n-pentanol).

Les amorceurs préférés sont les composés azoïques et, en particulier, le 2,2'-azo-bis-isobutyronitrile. On en utilise une quantité de l'ordre d'environ 1 à 5 % en poids par rapport au poids des monomères insaturés.

Le mélange obtenu après copolymérisation, constitué d'une solution dans le prépolyol de faible masse moléculaire, d'un copolymère précurseur renfermant de l'insaturation et des fonctions alcoxylables, est soumis ensuite à un traitement d'alcoxylation au moyen d'oxyde d'éthylène et/ou d'oxyde de propylène, avec formation de polyol et du copolymère préstabilisant greffé en "simple peigne". Les monomères à double insaturation ou possédant une constante de transfert élevée participent, d'une part, à la copolymérisation dans le prépolyol de faible masse moléculaire et, d'autre part, lors de la dispersion, au greffage du polymère sur le copolymère préstabilisant greffé en "simple peigne" avec formation du copolymère greffé en "double peigne".

Au cours de cette alcoxylation, les groupements alcoxylables du copolymère précurseur ainsi que les groupements hydroxyles du polyol de faible masse moléculaire sont transformés en groupements polyoxyéthylénés et/ou polyoxypropylénés. L'oxyde d'éthylène ou l'oxyde de propylène peuvent être utilisés seuls pour réaliser l'alcoxylation. Il est cependant préférable d'utiliser des mélanges d'oxyde d'éthylène et d'oxyde de propylène de manière à obtenir des condensats ayant les caractéristiques souhaitées en ce qui concerne notamment leur réactivité vis-à-vis des isocyanates. Il est connu, en effet, que l'alcoxylation au moyen d'oxyde d'éthylène de composés à atomes d'hydrogène actif donne des condensats possédant des groupements terminaux hydroxyle primaires, très réactifs vis-à-vis des isocyanates, tandis que l'alcoxylation au moyen d'oxyde de propylène donne des condensats à groupements hydroxyle secondaires, moins réactifs que les groupements hydroxyle primaires. Dans la fabrication des polyuréthannes, on cherche à utiliser des polyéthers ayant des proportions bien définies de groupements hydroxyle primaires par rapport aux groupements hydroxyle secondaires, ces proportions ayant une influence sur les propriétés des produits obtenus.

Dans le cadre de la présente invention, l'étape d'alcoxylation du copolymère greffé en solution dans le polyol de faible masse moléculaire est réalisée de préférence au moyen d'un mélange d'oxyde d'éthylène et d'oxyde de propylène renfermant de 40 à 95 % environ d'oxyde de propylène et de 60 à 5 % environ d'oxyde d'éthylène.

La quantité globale d'agent d'alcoxylation (oxyde d'éthylène et/ou oxyde de propylène) à utiliser est fonction essentiellement de la masse moléculaire du polyol que l'on veut former à partir de celui dans lequel se trouve dissous le copolymère greffé.

Par rapport au poids total du mélange soumis à l'alcoxylation, la quantité d'agent d'alcoxylation utilisée est comprise entre 20 % et 85 % en poids, de préférence entre 50 % et 75 % en poids, de manière à former à partir du prépolyol de faible masse moléculaire un polyol dont la masse moléculaire est de 3000 à 7000. Le traitement d'alcoxylation est effectué de manière classique à une température de 50°C à 200°C et en présence d'un catalyseur, de préférence un catalyseur basique, tel qu'un hydroxyde ou un alcoolate alcalin, par exemple l'hydroxyde de potassium, l'hydroxyde de sodium, le méthylate de potassium, ou le méthylate de sodium. La quantité de catalyseur à utiliser est d'environ 0,1 % à environ 10 % en poids par rapport au poids du mélange soumis à l'alcoxylation. Après alcoxylation en présence d'un catalyseur basique, le mélange de réaction est neutralisé, par exemple, au moyen de tout acide transformant le catalyseur en un sel neutre, tel l'acide acétique, l'anhydride carbonique, l'acide phosphorique, l'acide sulfurique.

Les copolymères greffés en "simple peigne" ainsi obtenus se trouvant en solution dans un polyol, peuvent être utilisés comme préstabilisants dans la préparation de dispersions stables de polymères-polyols destinées à la fabrication de polyuréthanne. Le copolymère stabilisant en "double peigne" résulte du greffage de polymère sur le copolymère greffé.

La présente invention concerne également la préparation de ces dispersions stables de polymères-polyols, par polymérisation in situ d'un ou de plusieurs monomères insaturés dans un polyol, en présence de ces copolymères préstabilisants greffés en "simple peigne", ainsi que leur utilisation dans la fabrication de mousses de polyuréthanne.

On utilise des quantités de copolymères préstabilisants greffés en "simple peigne" pris en solution d'environ 1 % à environ 45 % en poids, de préférence 5 % à 30 % en poids, par rapport au poids total du ou des monomères insaturés et du polyol.

Le copolymère greffé préstabilisant est de préférence incorporé dans le polyol dans lequel sont ajoutés ensuite le ou les monomères insaturés et le catalyseur. La polymérisation in situ dans le polyol est effectuée à une température comprise entre 25°C et 170°C, et de préférence entre 80°C et 120°C.

On peut utiliser comme polyols pour la polymérisation in situ, des polyols conventionnels, tels que des polyéthers-polyols ou des polyesters-polyols, saturés ou non saturés, ou des mélanges de polyols.

Sont préférés les polyéthers-polyols préparés par condensation d'oxyde d'éthylène et/ou d'oxyde de propylène sur des polyols, comme la glycérine, le triméthylolpropane, le pentaérythritol, le sorbitol, le sucre ou le propylèneglycol.

Comme monomères insaturés pour la préparation des polymères-polyols suivant l'invention, on peut utiliser des monomères à insaturations éthyléniques bien connus, tels que l'isoprène, le butadiène, le 1,4-pentadiène, le styrène, le méthylstyrène, l'α-méthylstyrène, le p-tertiobutylstyrène, l'acrylonitrile, l'acide acrylique, l'acrylate de 2-hydroxyéthyle, le méthacrylate de 2-hydroxyéthyle, l'acrylate et le méthacrylate de benzyle, d'isopropyle, le méthacrylonitrile, l'α-éthoxyacrylate d'éthyle, l'acrylate et le méthacrylate de butyle, de 2-éthylhexyle, de phényle, le N,N-diméthylacrylamide, le N,N-dibenzylacrylamide, le N-butylacrylamide, l'acétate de vinyle, l'alcool vinylique, le butylate de vinyle, l'acrylate et le méthacrylate de vinyle, la méthylvinylcétone, le fumarate de diméthyle, le maléate de diméthyle, l'acide maléique, l'acide fumarique, l'acrylate et le méthacrylate de diméthylaminoéthyle, de glycidyle, l'alcool allylique, la vinylpyridine et la vinylpyrrolidone, des halogénures de vinyle, tels que le chlorure de vinyle, le bromure de vinyle, le chlorure de vinylidène.

Les monomères insaturés préférés sont l'acrylonitrile et le styrène ou les mélanges d'acrylonitrile et de styrène. La quantité de monomère insaturé utilisée habituellement est d'environ 5 % à 60 %, de préférence de 15 % à 50 % en poids par rapport au poids total du mélange.

La polymérisation in situ dans le polyol est amorcée par des amorceurs à radicaux libres bien connus, tels que des peroxydes, des persulfates, des perborates, des percarbonates ou des composés azoïques. On préfère, en général, utiliser des catalyseurs azoïques, en particulier le 2,2'-azo-bis-isobutyronitrile, en combinaison avec des peroxydes de benzoyle à des concentrations d'environ 0,1 % à 5 % en poids par rapport au poids total du mélange de réaction. Si on le souhaite, on peut incorporer dans le mélange de réaction un agent de transfert de chaînes dans le but de modérer la réaction et de réduire la viscosité des compositions obtenues. On peut utiliser, à cet effet, des alcools ou des mercaptans, tels que, par exemple, le 1-dodécanethiol ou le 2-mercaptoéthanol.

Les copolymères stabilisants greffés en "double peigne" permettent, suivant la présente invention, de préparer des dispersions de polymères-polyols dont la stabilité est fortement améliorée, en particulier grâce à l'utilisation de monomère à double insaturation. Il ne se produit pas de dépôt significatif de particules solides de polymères au bout de périodes de stockage prolongé, même après plusieurs mois.

Ces dispersions sont utilisables sans problème, dans les formulations conventionnelles des polyuréthannes en vue notamment, par réaction avec de l'eau, des catalyseurs, des agents tensioactifs et d'un polyisocyanate, de la fabrication de mousses souples présentant de bonnes propriétés de portance.

La présente invention permet aussi, lorsqu'on utilise des mélanges d'acrylonitrile et de styrène comme monomères insaturés dans la préparation des polymères-polyols, de réduire la proportion d'acrylonitrile par rapport au styrène sans nuire à la stabilité des dispersions. On évite ainsi l'inconvénient du jaunissement des mousses de polyuréthanne dû à l'emploi de proportions élevées d'acrylonitrile.

Les Exemples 1 à 10 suivants décrivent la préparation de copolymères greffés "simple peigne" suivant l'invention. Les Exemples 10 à 43 illustrent leur utilisation dans la préparation de dispersions de polymères dans les polyols. Ces Exemples ne sont pas limitatifs.

Dans ces Exemples, les polyols désignés par les lettres A à F ont la composition suivante :

Prépolyol A : Condensat d'oxydes de propylène et d'éthylène sur glycérine, de masse moléculaire 1000. Ce copolymère contient 30 % en poids d'oxyde d'éthylène réparti statistiquement.

Prépolyol B : Identique au prépolyol A, mais contenant 14,7 mg de KOH/g polyol.

Prépolyol C : Condensat d'oxydes de propylène et d'éthylène sur glycérine, de masse moléculaire 1000, et d'indice de base 12,2. Le condensat est constitué d'un segment polyoxypropylène suivi d'un segment

7

statistique, contenant 60 et 40 % en poids d'oxyde de propylène et d'oxyde d'éthylène.

Polyol D : Condensat sur glycérine, de masse moléculaire 3500 contenant un mélange statistique de 87,5 % d'oxyde de propylène et de 12,5 % d'oxyde d'éthylène.

Polyol E : Condensat sur glycérine, de masse moléculaire de 4800, contenant 13,5 % en poids d'oxyde d'éthylène, dont 10 % terminaux.

Prépolyol F : Condensat d'oxydes d'éthylène et de propylène sur glycérine, de masse moléculaire 1000, et d'indice de base de 15 mg de KOH/g. Le condensat est formé d'un segment de polyoxypropylène suivi d'un segment statistique de 89 % - 11 % en poids d'oxyde de propylène et d'oxyde d'éthylène.

Les copolymères préstabilisants greffés en "simple peigne" décrits ci-dessous sont préparés dans un réacteur thermostatisé et équipé d'un agitateur, d'un thermomètre et d'un dispositif d'injection des monomères.

### Exemple 1 : Copolymère greffé en "simple peigne" 1

Un mélange de 1000 g de styrène, de 59 g de méthacrylate d'hydroxyéthyle (MAHE), de 52 g d'isoprène et de 47 g de 2,2'-azo-bis-isobutyronitrile (AIBN) est injecté en deux heures, à 120°C, dans 1500 g de prépolyol A. 630 g du produit ainsi obtenu sont ajoutés à un mélange de 865 g de prépolyol B et de 400 g de toluène. On additionne ensuite un mélange de 2660 g d'oxyde de propylène et de 356 g d'oxyde d'éthylène. Après évacuation sous vide des monomères résiduels et neutralisation, on obtient un polyol de masse moléculaire 3500, contenant 5 % de copolymère styrène - co - MAHE - co - isoprène, greffé de chaînons polyéther de masse moléculaire d'environ 800. Il contient environ 5 chaînons polyéther par chaîne de copolymère. La viscosité à 20°C est de 1300 mPa.s.

### Exemple 2 : Copolymère greffé en "simple peigne" II

A 831 g de prépolyol B et 156 g de prépolyol A, est additionné en 2 heures à 120°C, un mélange de 1115,9 g de styrène, de 69,7 g de MAHE, de 58,4 g d'isoprène, de 223 g d'oxyde de propylène et de 79 g d'AIBN. Après une heure de réaction, les monomères résiduels sont évacués sous vide, puis on injecte le mélange de 2214 g d'oxyde de propylène et de 332 g d'oxyde d'éthylène. Après neutralisation, on obtient un polyol de masse moléculaire 3500, contenant 19,7 % de copolymère styrène - co - MAHE - co - isoprène.

La viscosité du stabilisant II, à 25°C, s'élève à 9600 mPa.s. Ce copolymère a une masse moléculaire moyenne mesurée par osmométrie de 10.200 et il est greffé en moyenne de 5,9 chaînons polyéther de masse moléculaire moyenne de 830.

### Exemples 3 à 6, 6a et 9 : Copolymères greffés en "simple peigne" III à VI, IX et XI

Les copolymères préstabilisants greffés en "simple peigne" III à VI, IX et XI sont préparés de façon identiques à celle décrite dans l'Exemple 2. Les variables sont reprises dans le Tableau I ci-dessous. Les masses moléculaires des polyols, calculées à partir de l'indice d'hydroxyle, le taux de SMI ainsi que la viscosité du stabilisant à 20°C sont également repris dans le Tableau I.

TABLEAU I

| Exemples N° Stabilisant | 3 III | 4 IV | 5 V | 6 VI | 9 IX | 6a XI |
|---|---|---|---|---|---|---|
| Polyol A (g) | 156 | - | - | - | 157,5 | - |
| Polyol B (g) | 831 | - | - | - | 811,7 | - |
| Polyol C (g) | - | 955,4 | 982 | 1322,7 | - | 1251,7 |
| Styrène (g) | 1115,9 | 1115,9 | 1115,9 | 338,6 | 557,9 | 609,5 |
| MAHE (g) | 69,7 | 69,7 | 69,7 | - | 69,7 | - |
| MAG (g) (2) | - | - | - | 23,1 | - | 20,7 |
| Isoprène (g) | 29,2 | 29,2 | - | 8,8 | 14,6 | 15,9 |
| AIBN (g) | 79,2 | 79,2 | 79,2 | 24,0 | 39,6 | 43,2 |
| Oxyde de propylène (g) | 223 | 223 | 223 | 39,5 | 223 | 71,1 |
| (OP + OE ) (g) (1) | 2481 | 2545 | 2570 | 3270 | 2545 | 2940 |
| Masse moléculaire du polyol | 3500 | 3500 | 3500 | 3500 | 3500 | 3500 |
| SMI(%) (3) | 22,2 | 22,2 | 20,4 | 7 | 12,7 | 8,5 |
| Viscosité à 25°C (mPa•s) | 21400 | 16000 | 14200 | 1000 | 4650 | 1410 |
| $\overline{M}$n (osmométrie) (4) | 12700 | 11600 | 12600 | (5) | 12000 | (5) |
| Nombre moyen de greffons par chaîne | 6,6 | 5,9 | 7,1 | (5) | 12 | (5) |
| Masse moléculaire des greffons ($\overline{M}$n) | 830 | 830 | 830 | 3500 | 830 | 3500 |

(1) Mélange de 87 % en poids d'oxyde de propylène et 13 % en poids d'oxyde d'éthylène

(2) MAG = méthacrylate de glycidyle

(3) SMI = copolymère styrène-méthacrylate d'hydroxyéthyle ou de glycidyle-isoprène

(4) $\overline{M}$n = masse moléculaire moyenne en nombre de copolymère statistique styrène - méthacrylate d'hydroxyéthyle-isoprène

(5) Valeur non déterminée.

## Exemple comparatif 7 : Copolymère VII

A 1200 g de prépolyol A, est additionné en 2 heures à 120°C, un mélange de 700 g de styrène, de 100 g d'isoprène, de 74 g de MAHE et de 60 g d'AIBN. Le copolymère styrène-co-MAHE-co-isoprène est isolé du prépolyol par précipitation dans un mélange méthanol-eau (3/1). Le copolymère a une structure comparable à celle des copolymères greffés stabilisants, mais est dépourvu de chaînons polyéthers (voir Exemple comparatif 39).

## Exemple 8 : Copolymère greffé en "simple peigne" VIII

Dans un réacteur contenant 766 g de prépolyol F, est additionné en 2 heures à 120°C, un mélange de 846 g de styrène, de 52,9 g de MAHE, de 22,2 g d'isoprène, de 60 g d'AIBN et de 169,2 g d'oxyde de propylène. Après 1 heure de polymérisation, les monomères résiduels sont évacués sous vide. On ajoute ensuite successivement à 120°C, 2297 g d'oxyde de propylène, un mélange de 314 g d'oxyde de propylène et de 121 g d'oxyde d'éthylène, et finalement 408 g d'oxyde d'éthylène. Après neutralisation, on obtient un polyol de masse moléculaire 4800, contenant 14,2 % de copolymère styrène-co-MAHE-co-isoprène et présentant une viscosité à 25°C de 9000 mPa.s.

Le copolymère en "simple peigne" contient en moyenne 7,9 greffons polyéther par chaîne de masse moléculaire moyenne 1300. La masse moléculaire moyenne du copolymère mesurée par osmométrie est de 13500.

## Exemple 10 : Copolymère greffé en "simple peigne" X

A 810 g de prépolyol C et 2000 ml de toluène, est additionné un mélange de 108 g de méthacrylate de méthyle, de 7 g de MAHE, de 2,94 g d'isoprène, de 8 g d'AIBN et de 23,6 g d'oxyde de propylène. Après 15 minutes de polymérisation à 120°C, on ajoute 1821 g d'oxyde de propylène et 251 g d'oxyde d'éthylène. Après condensation, les monomères résiduels et le solvant sont distillés sous vide.

On obtient ainsi, après neutralisation, un copolymère méthacrylate de méthyle- co - MAHE - co - isoprène en solution dans un polyol de masse moléculaire 3500. Le copolymère est greffé théoriquement

EP 0 370 547 B1

de 6 chaînons polyéthers de masse moléculaire 830.

La viscosité du produit est de 960 mPa.s à 25°C.

**Préparation des dispersions**

Dispersions à base de copolymère greffé préstabilisant I

Les dispersions de polymères sont préparées dans un réacteur thermostatisé et équipé d'un agitateur, d'un thermomètre et d'un dispositif d'injection des monomerès. Après addition en une heure, des monomères et de l'amorceur, la polymérisation est prolongée pendant une heure, puis les monomères résiduels sont évacués sous vide.

**Exemples 11 à 16 : Tableau II**

Le copolymère greffé préstabilisant I est capable de stabiliser des dispersions de 20 % de SAN (styrène-acrylonitrile) contenant 20 % d'acrylonitrile. Ces dispersions sont décrites dans le Tableau II. En présence du copolymère greffé stabilisant, les dispersions de polymère sont stables et de couleur blanche et sont caractérisées en termes de viscosité à 20°C et de stabilité. La viscosité est mesurée avec un appareil muni d'un système de mesure de type "Couette" (MLW : Rheotest 2.1.). La stabillté est jugée grâce à un test de centrifugation à 10.000 tours par minute durant 30 minutes (JANETSKI T 24) (1700 g).

L'emploi d'une proportion supérieure de copolymère greffé stabilisant I permet une dispersion contenant 30 % de SAN, celle-ci étant ultérieurement diluée par le polyol II, afin de ramener la concentration de SAN dispersé à 20 % (Exemple 16).

**Exemples 17 à 22 : Tableau III**

Ces Exemples montrent l'influence d'un monomère à double insaturation dans le copolymère greffé, sur la stabilité de la dispersion de 20 % (Exemples 17 à 19) ou 30 % de SAN (Exemples 20 à 22).

L'emploi des copolymères greffés II et III, dotés d'unités d'isoprène, procure des dispersions plus stables, de taille de particules plus homogène que celles préparées au départ du copolymère greffé V.

10

TABLEAU  II  :  exemples 11 à 16

| N° | Polyol D (%) | Copolymère greffé préstabilisant pris en solution (%) | Monomères (%) | | | Amorceurs (%) (a) | | Viscosité @ 20°C (mPa.s) | Test de centrifugation (%) (b) |
|---|---|---|---|---|---|---|---|---|---|
| | | | Total | Styrène | AN | AIBN | Peroxyde de benzoyle | | |
| ex. 11 | 80 | 0 | 20 | 16 | 4 | 5,26 | — | (c) | (d) |
| ex. 12 | 40 | 40 | 20 | 16 | 4 | 5,26 | — | 1950 | 0 |
| ex. 13 | 80 | 0 | 20 | 16 | 4 | — | 1,16 | (c) | (d) |
| ex. 14 | 60 | 20 | 20 | 16 | 4 | — | 1,16 | 7350 | 15,8 |
| ex. 15 | 60 | 20 | 20 | 16 | 4 | 0,40 | 0,58 | 1780 | 5,8 |
| ex. 16 | 35 | 35 | 30 | 24 | 6 | — | 1,16 | 3260 | 8,3 |

(a) pourcentage en % d'amorceur par rapport aux monomères.
(b) pourcentage en poids de la dispersion polymère-polyol, sédimentée par centrifugation.
(c) Précipitation presque complète.
(d) non déterminé.

EP 0 370 547 B1

TABLEAU III : exemples 17 à 22

| N° | Polyol D (%) | Copolymère greffé préstabilisant pris en solution (%) | Isoprène dans le copolymère greffé préstabilisant (%) | Monomères (%) | | | Amorceurs (%) | | Conversion (%) | Viscosité @ 20°C (mPa·s) | Viscosité @ 20°C après dilution à 20% SAN (mPa·s) | Test de centrifugation (%) (a) |
|---|---|---|---|---|---|---|---|---|---|---|---|---|
| | | | | Total | Styrène | AN | AIBN | Peroxyde de benzoyle | | | | |
| ex 17 | 75 | 5 | 1,17 | 20 | 16 | 4 | 0,40 | 0,58 | 87 | 4654 | (b) | (b) |
| ex 18 | 75,5 | 4,5 | 0,58 | 20 | 16 | 4 | 0,40 | 0,58 | 81 | 1931 | (b) | (b) |
| ex 19 | 75 | 5 | - | 20 | 16 | 4 | 0,40 | 0,58 | 86 | 4650 | (b) | (b) |
| ex 20 | 61,2 | 8,8 | 1,17 | 30 | 24 | 6 | 0,40 | 0,58 | 87 | 4062 | 2210 | 5,9 |
| ex 21 | 62,1 | 7,9 | 0,58 | 30 | 24 | 6 | 0,40 | 0,58 | 83 | 4000 | 2230 | 7,4 |
| ex 22 | 61,2 | 8,8 | - | 30 | 24 | 6 | 0,40 | 0,58 | 91 | 10480 | 3140 | 16,1 |

(a) pourcentage en poids de la dispersion polymère-polyol (30 %), sédimentée par centrifugation.

(b) non déterminé.

**Exemples 23 à 25 (Tableau IV)**

Ces Exemples permettent de comparer des dispersions de 20 à 40 % de SAN stabilisées par une quantité de copolymère greffé préstabilisant proportionnelle au pourcentage de SAN dispersé.

On constate une augmentation importante de la viscosité en fonction de l'accroissement du pourcentage de SAN dispersé et un effet contraire après dilution à 20 % de SAN.

**Exemples 26 à 29 (Tableau V)**

Ces Exemples démontrent l'effet du pourcentage de copolymère greffé préstabilisant sur les propriétés des dispersions.

On a préparé des dispersions de 40 % de SAN stabilisées par 3,8, 7,6, 11,4 et 15,2 % de copolymère greffé préstabilisant IV pris en solution. La première dispersion (Ex. 26) est instable, et fort visqueuse. Lorsque le pourcentage de copolymère est doublé (Ex. 27), la dispersion devient stable, et sa viscosité est beaucoup plus faible. Si la proportion de copolymère greffé est encore augmentée (Ex. 28 et 29), la viscosité croît à nouveau. Les tests de centrifugation montrent la baisse importante de la quantité de précipité en fonction de l'augmentation du pourcentage de copolymère greffé préstabilisant II.

**Exemples 21, 30 à 35 (Tableau VI)**

Ces exemples permettent d'élargir l'utilisation des copolymères greffés à la stabilisation d'autres polymères.

Grâce aux copolymères greffés, on peut préparer des dispersions stables, aussi bien de polystyrène (Ex. 30) que de SAN à base de 20, 30, 50 et 70 % d'acrylonitrile (Ex. 21, 31 à 35).

Les Exemples décrits démontrent le large domaine d'application des copolymères greffés objets de l'invention en tant que stabilisants de dispersions de différents polymères dans le polyol.

## TABLEAU IV : Exemples 23 à 25

| N° | Polyol D (%) | Copolymère greffé préstabilisant IV pris en solution (%) | Monomères (%) | | | Amorceurs (%) | | Conversion (%) | Viscosité @ 20°C (mPa.s) | Viscosité @ 20°C après dilution @ 20 % de SAN (mPa.s) | Test de centrifugation (a) (%) |
|---|---|---|---|---|---|---|---|---|---|---|---|
| | | | Total | Styrène | Acryloni-trile | AIBN | Peroxyde de benzoyle | | | | |
| ex.23 | 74,6 | 5,4 | 20 | 16 | 4 | 0,40 | 0,58 | 84 | 4350 | — | (b) |
| ex.24 | 61,9 | 8,1 | 30 | 24 | 6 | 0,40 | 0,58 | 88 | 8385 | 3040 | 9,9 |
| ex.25 | 49,2 | 10,8 | 40 | 32 | 8 | 0,40 | 0,58 | 91 | 31270 | 2900 | (b) |

(a) pourcentage en poids de la dispersion polymère-polyol (20 %), sédimentée par centrifugation.

(b) non déterminé.

EP 0 370 547 B1

## TABLEAU V : Exemples 26 à 29

| N° | Polyol D (%) | Copolymère greffé préstabili-sant IV pris en solution (%) | Monomères (%) | | | Amorceurs (%) | | Conversion (%) | Viscosité @ 20°C (mPa.s) | Viscosité @ 20°C après dilu-tion @ 20% de SAN (mPa.s) | Test de centri-fugation (a) (%) |
|---|---|---|---|---|---|---|---|---|---|---|---|
| | | | Total | Styrène | Acryloni-trile | AIBN | Peroxyde de benzoyle | | | | |
| ex.26 | 56,2 | 3,8 | 40 | 32 | 8 | 0,40 | 0,58 | 89 | 43160 | 3520 | 36 |
| ex.27 | 52,4 | 7,6 | 40 | 32 | 8 | 0,40 | 0,58 | 90 | 7860 | 1720 | 7 |
| ex.28 | 48,6 | 11,4 | 40 | 32 | 8 | 0,40 | 0,58 | 92 | 13650 | 1800 | 4,6 |
| ex.29 | 15,2 | 15,2 | 40 | 32 | 8 | 0,40 | 0,58 | 89 | 16770 | 4700 | 0,6 |

(a) pourcentage en poids de la dispersion polymère-polyol (20 %), sédimentée par centrifugation.

(b) non déterminé.

EP 0 370 547 B1

Exemples 21, 36 à 38 (Tableau VII)

Ces Exemples décrivent la synthèse de dispersions de SAN en vue de la préparation de mousses de haute portance (polyol D) et de haute résilience (polyol E). Lors de la préparation de dispersions pour

**TABLEAU VI : exemples 21, 30 à 35**

| N° | Polyol D (%) | Copolymère greffé préstabilisant réf. | Polyol contenant le copolymère greffé préstabilisant pris en solution (%) | Monomères (%) | | | | Amorceurs (%) | | Conversion (%) | Viscosite @ 20°C mPa.s | Viscosite @ 20°C dilution à 20 % avec le polyol (%) | Test de centrifugation (a) (%) |
|---|---|---|---|---|---|---|---|---|---|---|---|---|---|
| | | | | Total | Styrène | AN | MMA (b) | AIBN | Peroxyde de benzoyle | | | | |
| ex30 | 61,2 | II | 8,8 | 30 | 30 | -- | — | — | 0,58 | 75 | 3815 | 2520 | 0 |
| ex21 | 62,1 | III | 7,9 | 30 | 24 | 6 | — | 0,40 | 0,58 | 83 | 4062 | 2210 | 7,4 |
| ex31 | 62,1 | III | 7,9 | 30 | 21 | 9 | — | 0,40 | 0,58 | 92 | 6970 | 2810 | 0 |
| ex32 | 62,1 | III | 7,9 | 30 | 15 | 15 | — | 0,40 | 0,58 | 91 | 6280 | 2590 | 6,1 |
| ex33 | 62,4 | III | 7,9 | 30 | 9 | 21 | — | 0,40 | 0,58 | 94 | 4090 | 2515 | 9,5 |
| ex34 | 62,1 | III | 7,9 | 30 | — | 30 | — | 0,40 | 0,58 | 90 | 102000 | 4792 | 63 |
| ex35 | 75,5 | III | 4,5 | 20 | 13,6 | 13,4 | 3 | 0,40 | 0,58 | 86 | 2505 | — | 18 |

(a) pourcentage en poids de la dispersion polymère-polyol (40 %) sédimentée par centrifugation.

(b) Méthacrylate de méthyle.

mousses de haute résilience, le pourcentage de SAN est ramené à 14 % par dilution avec le polyol V.

On constate que le copolymère greffé stabilisant pour mousses de haute résilience (copolymère greffé préstabilisant VIII) stabilise également les dispersions pour mousses de haute portance, et vice versa.

**Exemple comparatif 39 (Tableau VII)**

Cet exemple comparatif démontre la nécessité de greffer des chaînons polyéthers sur le copolymère styrène-méthacrylate d'hydroxyéthyle-isoprène. Le copolymère VII, dépourvu de greffons polyéthers est dissous dans le polyol D par l'intermédiaire de tétrahydrofuranne. La dispersion de 20 % de SAN est préparée en présence de copolymère VII dans le polyol D débarassé du solvant. Déjà après injection d'environ un tiers du mélange des monomères, il y a précipitation du SAN.

**Exemples 21, 40 à 42 (Tableau VIII)**

Ces exemples montrent le rôle du nombre et de la taille des chaînons polyéthers sur les principales caractéristiques des dispersions.

Lorsque la dispersion de 30 % de SAN est stabilisée par un copolymère greffé théoriquement de 12 chaînons polyéthers en moyenne, ($\overline{M}n$ 830) (Ex. 40), elle est plus stable que celle à base d'un copolymère doté de deux fois moins de chaînons polyéthers (Ex. 21) (test de centrifugation).

Les copolymères greffés de chaînons polyéthers de $\overline{M}n$ 3500 donnent lieu à des dispersions plus visqueuses, et aussi moins bien stabilisées, comme en témoignent les tests de centrifugation.

**Exemples 21 et 43 (Tableau VIII)**

Ces Exemples illustrent l'emploi de copolymères greffés préstabilisants de constitution différente. Le copolymère greffé est à base de styrène (Ex. 21 : copolymère greffé préstabilisant III) ou de méthacrylate de méthyle (Ex. 43 : copolymère greffé préstabilisant X). Avec chacun d'eux, il est possible de préparer une dispersion stable de 30 % de SAN.

EP 0 370 547 B1

TABLEAU VII : exemples 21, 36 à 38 et 39

| N° | Polyol | | Copolymère greffé préstabilisant pris en solution | | Monomères (%) | | | Amorceurs (%) | | Conversion (%) | Viscosité @ 20°C (mPa.s) | Concentration en SAN après dilution (%) | Viscosité @ 20°C après dilution (mPa.s) |
|---|---|---|---|---|---|---|---|---|---|---|---|---|---|
| | Réf. | (%) | Réf | (%) | Total | Styrène | AN | AIBN | Peroxyde de benzoyle | | | | |
| Ex.21 | D | 62,1 | III | 7,9 | 30 | 24 | 6 | 0,4 | 0,58 | 83 | 4000 | 20 | 2230 |
| Ex.36 | D | 57,7 | VIII | 12,3 | 30 | 24 | 6 | 0,4 | 0,58 | 89 | 5660 | 20 | 2510 |
| Ex.37 | E | 62,1 | III | 7,9 | 30 | 24 | 6 | 0,4 | 0,58 | 91 | 9015 | 14 | 2400 |
| Ex.38 | E | 57,7 | VIII | 12,3 | 30 | 24 | 6 | 0,4 | 0,58 | 89 | 10430 | 14 | 2600 |
| Ex.39 | D | 79 | VII | 10 (a) | 20 | 16 | 4 | — | 1,16 | — | — | — | — |

(a) solution de 10 % du copolymère VII dans le polyol D.

## Evaluation des dispersions

On mélange les dispersions des polymères-polyols sous agitation, dans les proportions indiquées, avec l'eau, les catalyseurs et les silicones, puis on ajoute l'isocyanate; après agitation énergique, on coule le

λ pris en solution

TABLEAU   VIII : exemples 21, 40 à 42

| N° | Polyol D (%) | Copolymère greffé préstabilisant λ Réf. | (%) | M̄n des greffons polyéthers | Nbre moyen des greffons polyéthers | Monomères (%) Total | Styrène | AN | Amorceurs (%) AIBN | Peroxyde de Benzoyle | Conversion (%) | Viscosité @ 20°C (mPa.s) | Viscosité à 20 % SAN @ 20°C (mPa.s) | Test de centrifugation (%) |
|---|---|---|---|---|---|---|---|---|---|---|---|---|---|---|
| Ex.21 | 62,1 | III | 7,9 | 830 | 6,6 | 30 | 24 | 6 | 0,40 | 0,58 | 83 | 4000 | 2230 | 7,4 |
| Ex.40 | 56,2 | IX | 13,8 | 830 | 12 | 30 | 24 | 6 | 0,40 | 0,58 | 88 | 4700 | 2725 | 0 |
| Ex.41 | 44,9 | VI | 25,1 | 3500 | (6) (a) | 30 | 24 | 6 | 0,40 | 0,58 | 88 | 18440 | 4240 | 39 |
| Ex.42 | 49,4 | XI | 20,6 | 3500 | (3) (a) | 30 | 24 | 6 | 0,40 | 0,58 | 88 | 15300 | (b) | 73 |
| Ex.43 | 51,5 | X | 18,5 | 830 | (6) (a) | 30 | 24 | 6 | 0,40 | 0,58 | 92 | 4530 | 2400 | 10,2 |

(a) valeur théorique

(b) pas dilué à 20 % de SAN, car il possède trop de grumeaux.

19

mélange dans un moule en papier bitumé.

Le Tableau IX (Exemples 44 à 50) résume les formules utilisées, ainsi que les propriétés physiques des mousses obtenues à partir des dispersions décrites dans les exemples précédents.

## TABLEAU IX

**Formulations et propriétés des mousses de polyuréthanne obtenues à partir de dispersions suivant l'invention.**

| Exemples | 44 | 45 | 46 | 47 | 48 | 49 | 50 |
|---|---|---|---|---|---|---|---|
| Polyol D | 100 | | | | | | |
| Dispersion Ex. 20 | | 100 | | | | | |
| Dispersion Ex. 19 | | | 100 | | | | |
| Dispersion Ex. 14 | | | | 100 | | | |
| Dispersion Ex. 15 | | | | | 100 | | |
| Dispersion Ex. 21 | | | | | | 100 | |
| Dispersion Ex. 43 | | | | | | | 100 |
| Eau | 3 | 3 | 3 | 3 | 3 | 3 | 3 |
| Silicone BF 4700 | 1 | 1 | 1 | 1 | 1 | 1 | 1 |
| Dabco 33 LV (1) | 0,07 | 0,07 | 0,07 | 0,07 | 0,07 | 0,07 | 0,07 |
| Niax A 1 (2) | 0,07 | 0,07 | 0,07 | 0,07 | 0,07 | 0,07 | 0,07 |
| Octoate d'étain | 0,20 | 0,20 | 0,175 | 0,20 | 0,20 | 0,20 | 0,20 |
| TDI 80/65 (80/20)(1 = 108) (3) | 39 | 37,8 | 38,2 | 37,8 | 36,9 | 37,9 | 38,4 |
| **Propriétés physiques** | | | | | | | |
| Temps de développement (sec) | 132 | 110 | 135 | 122 | 122 | 107 | 103 |
| Densité apparente (kg/m$^3$) (4) | 31,3 | 33,7 | 33,5 | 33,3 | 36,7 | 31,5 | 33,0 |
| Charge à la rupture (kPa) (5) | 91 | 142 | 137 | 146 | 130 | 110 | 175 |
| Allongement à la rupture (%) (5) | 155 | 141 | 175 | 152 | 111 | 71 | 138 |
| Résistance à la déchirure (kN/m) (5) | 0,51 | 0,64 | 0,63 | 0,80 | 0,72 | 0,40 | 0,52 |
| Compression set : 90%-70°C-22 h (%) (5) | 16,9 | 8,4 | 15,1 | 8,7 | 6,7 | 7,6 | 87 |
| Indentation – 5è cycle 25% (kPa) | 3,1 | 4,4 | 5,1 | 4,8 | 7,5 | 6,3 | 4,9 |
| (6) 40% (kPa) | 5,1 | 9,0 | 5,9 | 6,0 | 9,3 | 7,0 | 5,7 |
| 65% (kPa) | 6,9 | 12,5 | 11,5 | 14,2 | 20,9 | 14,5 | 12,2 |
| Indice de portance-5è cycle (7) | 0,11 | 0,16 | 0,18 | 0,18 | 0,25 | 0,22 | 0,17 |

(1) Catalyseur aminé; marque déposée; Air Products.
(2) Catalyseur aminé; marque déposée; Union Carbide.
(3) Toluène diisocyanate.
(4) DIN 53420.
(5) ASTM D 1564.
(6) DIN 53577.
(7) Indentation à 40 %/densité apparente.

**Revendications**

1. Procédé de préparation d'un copolymère préstabilisant greffé en "simple peigne" en solution dans un polyol d'une masse moléculaire de 3000 à 7000, caractérisé en ce qu'il comprend la copolymérisation in situ d'un mélange de monomères éthyléniquement insaturés renfermant au moins un monomère monoinsaturé exempt de fonctions alcoxylables choisi dans le groupe comprenant le styrène, l'α-méthylstyrène, le méthylstyrène, le 2,4-diméthylstyrène, l'éthylstyrène, l'isopropylstyrène, le butylstyrène, le phénylstyrène, le cyclohexylstyrène, le benzylstyrène, le chlorostyrène, le 2,5-dichlorostyrène, le bromostyrène, le cyanostyrène, le nitrostyrène, le N,N-diméthylaminostyrène, l'acétoxystyrène, le 4-vinylbenzoate de méthyle, le phénoxystyrène, l'acrylonitrile, le méthacrylonitrile, l'acrylate et le méthacrylate de méthyle, de cyclohexyle, de benzyle, d'isopropyle, d'octyle, l'α-chloroacrylate de méthyle, l'α-éthoxyacrylate d'éthyle, l'acrylate et le méthacrylate de butyle, de 2-éthylhexyle, de phényle, l'α-chloroacrylonitrile, le N,N-diméthylacrylamide, le N,N-dibenzylacrylamide, le chlorure de vinylidène, le bromure de vinyle, le chlorure de vinyle, le fluorure de vinyle, le fluorure de vinylidène, l'acétate de vinyle, le chloracétate de vinyle, l'acétate d'isopropényle, le formiate de vinyle, le méthoxyacétate de vinyle, le benzoate de vinyle, l'éther méthylvinylique, l'éther éthylvinylique, l'éther propylvinylique, l'éther butylvinylique, l'éther phénylvinylique, la méthylvinylcétone, la vinylpyridine, l'éthylvinylcétone, la phénylvinylcétone, la N-vinylpyrrolidone, le fumarate de diméthyle et le maléate de diméthyle, et un monomère insaturé à fonction alcoxylable choisi dans le groupe comprenant l'alcool allylique, le 2-butène-1,4-diol, le 3-butène-1,2-diol, l'éther monoallylique de la glycérine, l'éther monoallylique du triméthylolpropane, l'acrylate d'hydroxyéthyle, le méthacrylate d'hydroxyéthyle, l'acrylate d'hydroxypropyle, le méthacrylate d'hydroxypropyle, le monoacrylate et le monométhacrylate de la glycérine, la monoéthanolamine, la diéthanolamine, la triéthanolamine, l'acide acrylique, l'acide méthacrylique, l'acide fumarique, l'acide itaconique, l'acide crotonique, l'anhydride maléique, l'acrylamide, le méthacrylamide, le N-butylacrylamide, l'acrylate de glycidyle, le méthacrylate de glycidyle, l'éther allylglycidique, le monoépoxyde de butadiène et le vinylcyclohexane-3,4-époxyde, ledit mélange renfermant pour 100 moles de monomère monoinsaturé exempt de fonctions alcoxylables de 1 à 20 moles de monomère insaturé à fonction alcoxylable, ladite copolymérisation s'effectuant dans un prépolyol ayant une masse moléculaire inférieure à 5000, à une température de 25°C à 180°C, en présence d'un catalyseur de polymérisation, la proportion pondérale du mélange de monomères étant de 1 à 75 % par rapport au prépolyol, de manière à former un copolymère précurseur insaturé, à fonction alcoxylable en solution dans le prépolyol, et l'alcoxylation dudit copolymère précurseur et du prépolyol au moyen d'un agent d'alcoxylation choisi parmi l'oxyde d'éthylène, l'oxyde de propylène ou un mélange d'oxyde d'éthylène et d'oxyde de propylène la proportion pondérale d'agent d'alcoxylation par rapport au poids total du mélange soumis à l'alcoxylation étant de 20 à 85 %, à une température de 50°C à 200°C, en présence d'un catalyseur.

2. Procédé suivant la revendication 1, caractérisé en ce que le mélange de monomères renferme au moins un monomère favorisant le greffage radicalaire choisi dans le groupe comprenant le butadiène, l'isoprène, le 1,4-pentadiène, le pipérylène, le 1,4-hexadiène, le 1,7-octadiène, l'acrylate d'allyle, le méthacrylate d'allyle, le diméthacrylate d'éthylène glycol, le diméthacrylate de diéthylène glycol, le diméthacrylate de 1,4-butanediol, le divinylbenzène, l'éther divinylique, le sulfure de divinyle, la divinylsulfone, le N,N-diéthylaminoéthylacrylate, le laurate de vinyle, l'isobutyrate de vinyle, le dodécanate de vinyle, l'hexanoate de vinyle, les bromostyrènes, les α et β-bromostyrènes, le vinylnaphtalène et le vinylanthracène, la proportion pour 100 moles de monomère monoinsaturé exempt de fonctions alcoxylables, étant de 1 à 25 moles de monomère favorisant le greffage radicalaire.

3. Procédé suivant l'une ou l'autre des revendications 1 et 2, caractérisé en ce que la proportion pondérale du mélange de monomères est de 20 à 60 % par rapport au prépolyol.

4. Procédé suivant l'une quelconque des revendications 1 à 3, caractérisé en ce que la masse moléculaire du prépolyol est comprise entre 500 et 2000.

5. Procédé suivant l'une quelconque des revendications 1 à 4, caractérisé en ce que la quantité pondérale de catalyseur de polymérisation est de 1 à 5 % par rapport aux monomères éthyléniquement insaturés.

6. Procédé suivant la revendication 5, caractérisé en ce que le catalyseur est choisi dans le groupe comprenant le peroxyde de dibenzoyle, l'hydroperoxyde de benzoyle, l'hydroperoxyde de t-butyle, le peroxyde de t-butyle, le peroxyde de diisopropyle, l'hydroperoxyde de diisopropylbenzène, l'hydroperoxyde de cumène, le 2,2'-azo-bis-isobutyronitrile, le 2,2'-azo-bis(2,4-diméthylvaléronitrile), le 2-t-butylazo-2-cyano-4-méthylpentane et le 4,4'-azo-bis (4-cyano-n-pentanol).

7. Procédé suivant la revendication 6, caractérisé en ce que le catalyseur est le peroxyde de dibenzoyle ou le 2,2'-azo-bis-isobutyronitrile.

8. Procédé suivant l'une quelconque des revendications 1 à 7, caractérisé en ce que l'agent d'alcoxylation précité est un mélange d'oxyde d'éthylène et d'oxyde de propylène.

9. Procédé suivant la revendication 8, caractérisé en ce que le mélange renferme de 40 à 95 % d'oxyde de propylène et de 5 à 60 % d'oxyde d'éthylène.

10. Procédé suivant l'une quelconque des revendications 1 à 9, caractérisé en ce que la proportion pondérale d'agent d'alcoxylation est de 50 à 75 %.

11. Procédé suivant l'une quelconque des revendications 1 à 10, caractérisé en ce qu'on utilise comme catalyseur pour l'alcoxylation un catalyseur basique et en ce qu'on neutralise le mélange de réaction formé du copolymère greffé en "simple peigne" en solution dans le polyol par un acide.

12. Procédé suivant l'une ou l'autre des revendication 11, caractérisé en ce que la quantité de catalyseur basique à utiliser est d'environ 0,1 à environ 10 % en poids par rapport au poids du mélange copolymère précurseur-prépolyol soumis à l'alcoxylation.

13. Procédé suivant l'une quelconque des revendications 11 à 12, caractérisé en ce que l'on utilise comme catalyseur basique un composé choisi dans le groupe comprenant l'hydroxyde de potassium, l'hydroxyde de sodium, le méthylate de potassium et le méthylate de sodium.

14. Procédé de préparation d'une dispersion stable de polymère-polyol contenant un copolymère stabilisant greffé "en double peigne", caractérisé en ce qu'il comprend la polymérisation in situ d'au moins un monomère éthyléniquement insaturé choisi dans le groupe comprenant l'isoprène, le butadiène, le 1,4-pentadiène, le styrène, le méthylstyrène, l'α-méthylstyrène, le p-tertiobutylstyrène, l'acrylonitrile, l'acide acrylique, l'acrylate de 2-hydroxyéthyle, le méthacrylate de 2-hydroxyéthyle, l'acrylate et le méthacrylate de benzyle, d'isopropyle, le méthacrylonitrile, l'α-éthoxyacrylate d'éthyle, l'acrylate et le méthacrylate de butyle, de 2-éthylhexyle, de phényle, le N,N-diméthylacrylamide, le N,N-dibenzylacrylamide, le N-butylacrylamide, l'acétate de vinyle, l'alcool vinylique, le butylate de vinyle, l'acrylate et le méthacrylate de vinyle, la méthylvinylcétone, le fumarate de diméthyle, le maléate de diméthyle, l'acide maléique, l'acide fumarique, l'acrylate et le méthacrylate de diméthylaminoéthyle, de glycidyle, l'alcool allylique, la vinylpyridine, la vinylpyrrolidone, le chlorure de vinyle, le bromure de vinyle et le chlorure de vinylidène, dans le polyol, en présence d'un copolymère préstabilisant greffé "en simple peigne" en solution, tel que préparé suivant l'une quelconque des revendications 1 à 14, et d'un amorceur de polymérisation, à une température de 25 à 170°C, la proportion pondérale de solution de copolymère préstabilisant greffé étant de 1 % à 45 % par rapport au poids total de monomère insaturé et de polyol et la proportion pondérale de monomère éthyléniquement insaturé étant de 5 à 60 % par rapport au poids total de solution de copolymère préstabilisant greffé, de polyol et d'amorceur, le monomère insaturé étant, sous l'effet de l'amorceur, polymérisé en particules insolubles et partiellement greffé sur le copolymère préstabilisant en "simple peigne" dans le polyol et produisant un copolymère greffé "en double peigne" assurant la stabilisation de la dispersion ainsi préparée.

15. Procédé suivant la revendication 14, caractérisé en ce que la proportion pondérale de solution de copolymère préstabilisant greffé est de 5 à 30 %.

16. Procédé suivant l'une ou l'autre des revendications 14 et 15, caractérisé en ce que le polyol est un polyéther-polyol préparé par condensation d'oxyde de propylène et/ou d'oxyde d'éthylène sur un polyol, tel que la glycérine, le triméthylolpropane, le pentaérythritol, le sorbitol, le sucre ou le propylène glycol.

**17.** Procédé suivant l'une quelconque des revendications 14 à 16, caractérisé en ce que la proportion pondérale de monomère éthyléniquement insaturé est de 15 à 50 %.

**18.** Procédé suivant l'une quelconque des revendications 14 à 17, caractérisée en ce que le monomère éthyléniquemnet insaturé est choisi dans le groupe comprenant l'acrylonitrile, le styrène et les mélanges d'acrylonitrile et de styrène.

**19.** Procédé suivant l'une quelconque des revendications 14 à 18, caractérisé en ce que la proportion pondérale d'amorceur est de l'ordre de 0,1 à 5 % par rapport au poids total de monomère éthyléniquement insaturé, de solution de copolymère préstabilisant greffé et de polyol.

**20.** Procédé suivant l'une quelconque des revendications 14 à 19, caractérisé en ce que l'amorceur est choisi dans le groupe comprenant le peroxyde de benzoyle, le 2,2'-azo-bis-isobutyronitrile et les mélanges de ces composés.

**21.** Procédé suivant l'une quelconque des revendications 14 à 20, caractérisé en ce que la température de polymérisation est comprise entre 80 et 120°C.

**22.** Procédé suivant l'une quelconque des revendications 14 à 21, caractérisé en ce que l'on ajoute lors de la polymérisation précitée un agent de transfert de chaînes.

**23.** Procédé de préparation d'une mousse de polyuréthanne, caractérisé en ce que l'on fait réagir une dispersion stable de polymère-polyol préparée suivant l'une quelconque des revendications 14 à 22, avec de l'eau, des catalyseurs, des agents tensioactifs et un polyisocyanate.

**24.** Procédé suivant la revendication 23, caractérisé en ce que l'on mélange l'eau, les catalyseurs et les agents tensioactifs avec la dispersion de polymère-polyol avant de mettre cette dernière en contact avec le polyisocyanate.

**Claims**

**1.** A method for preparing a "single comb-shaped" prestabilising graft copolymer in a polyol solution having a molecular weight of 3000 to 7000, characterised in that it comprises the in situ copolymerisation or a mixture of unsaturated ethylene monomers containing at least one monounsaturated monomer free of alkoxy functioning groups chosen from the group comprising styrene, α-methylstyrene, methylstyrene, 2,4-dimethylstyrene, ethylstyrene, isopropylstyrene, butylstyrene, phenylstyrene, cyclohexylstyrene, benzylstyrene, chlorostyrene, 2,5-dichlorostyrene, bromostyrene, cyanostyrene, nitrostyrene, N,N-dimethylaminostyrene, acetoxystyrene, methyl 4-vinylbenzoate, phenoxystyrene, acrylonitrile, methylacrylonitrile, methyl, cyclohexyl, benzyl, isopropyl and octyl acrylate and methacrylate, methyl α-chloroacrylate, ethyl α-ethoxyacrylate, butyl, 2-ethylhexyle and phenyl acrylate and methacrylate, α-chloroacrylonitrile, N,N-dimethylacrylamide, N,N-dibenzylacrylamide, vinylidene chloride, vinyl bromide, vinyl chloride, vinyl fluoride, vinylidene fluoride, vinyl acetate, vinyl chloroacetate, isopropenyl acetate, vinyl formate, vinyl methoxyacetate, vinyl benzoate, methylvinyl ether, ethylvinyl ether, propylvinyl ether, butylvinyl ether, phenylvinyl ether, methylvinyl ketone, vinyl pyridine, ethylvinyl ketone, phenylvinyl ketone, N-vinyl pyrrolidone, dimethyl fumarate and dimethyl maleate, and an unsaturated monomer with an alkoxy functioning group chosen from the group comprising allyl alcohol, 2-butene-1,4-diol, 3-butene-1,2-diol, glycerine monoallyl ether, trimethylolpropane monoallyl ether, hydroxyethyl acrylate, hydroxyethyl methacrylate, hydroxypropyl acrylate, hydroxypropyl methacrylate, glycerine monoacrylate and monomethacrylate, monoethanolamine, diethanolamine, triethanolamine, acrylic acid, methacrylic acid, fumaric acid, itaconic acid, crotonic acid, maleic anhydride, acrylamide, methacrylamide, N-butylacrylamide, glycidyl acrylate, glycidyl methacrylate, allylglycidic ether, butadiene monoepoxide and vinylcyclohexane-3,4-epoxide, said mixture comprising per 100 mols of monounsaturated monomer free of alkoxy functioning groups from 1 to 20 mols of unsaturated monomer with an alkoxy functioning group, said copolymerisation being carried out in a prepolyol having a molecular weight lower than 5000, at a temperature of from 25°C to 180°C, in the presence of a polymerisation catalyst, the proportion by weight of the mixture of monomers being from 1 to 75% in relation to the prepolyol, so as to form an unsaturated copolymer precursor with an alkoxy functioning group in solution in the prepolyol, and the alkoxylation of said copolymer precursor and of the prepolyol by

EP 0 370 547 B1

means of an alkoxylating agent chosen from ethylene oxide, propylene oxide or a mixture of ethylene oxide and propylene oxide, the proportion by weight of alkoxylating agent in relation to the total weight of the mixture subjected to the alkoxylation being from 20 to 85%, at a temperature from 50°C to 200°C, in the presence of a catalyst.

2. A method according to claim 1, characterised in that the mixture of monomers contains at least one monomer promoting radicals for grafting, chosen from the group comprising butadiene, isoprene, 1,4-pentadiene, piperylene, 1,4-hexadiene, 1,7-octadiene, allyl acrylate, allyl methacrylate, ethylene glycol dimethacrylate, diethylene glycol dimethacrylate, 1,4-butanediol dimethacrylate, divinylbenzene, divinyl ether, divinyl sulphide, divinyl sulphone, N,N-diethylamino ethylacrylate, vinyl laurate, vinyl isobutyrate, vinyl dodecanate, vinyl hexanoate, bromostyrenes, $\alpha$ and $\beta$-bromostyrenes, vinylnaphthalene and vinylanthracene, the proportion per 100 mols of monounsaturated monomer free of alkoxy functioning groups being from 1 to 25 mols of the monomer which promotes radicals for grafting.

3. A method according to either of claims 1 and 2, characterised in that the proportion by weight of the mixture of monomers is from 20 to 60% in relation to the prepolyol.

4. A method according to any one of claims 1 to 3, characterised in that the molecular weight of prepolyol is between 500 and 2000.

5. A method according to any one of claims 1 to 4, characterised in that the quantity by weight of polymerisation catalyst is from 1 to 5% in relation to the unsaturated ethylene monomers.

6. A method according to claim 5, characterised in that the catalyst is chosen from the group comprising dibenzoyl peroxide, benzoyl hydroperoxide, t-butyl hydroperoxide, t-butyl peroxide, diisopropyl peroxide, diisopropylbenzene hydroperoxide, cumene hydroperoxide, 2,2'-azo-bis-isobutyronitrile, 2,2'-azo-bis(2,4-dimethylvaleronitrile),2-t-butylazo-2-cyano-4-methyl pentane and 4,4'-azo-bis (4-cyano-n-pentanol).

7. A method according to claim 6, characterised in that the catalyst is dibenzoyl peroxide or 2,2'-azo-bis-isobutyronitrile.

8. A method according to any one of claims 1 to 7, characterised in that said alkoxylating agent is a mixture of ethylene oxide and propylene oxide.

9. A method according to claim 8, characterised in that the mixture contains from 40 to 95% of propylene oxide and from 5 to 60% of ethylene oxide.

10. A method according to any one of claims 1 to 9, characterised in that the proportion by weight of alkoxylating agent is from 50 to 75%.

11. A method according to any one of claims 1 to 10, characterised in that the catalyst used for the alkoxylation is a basic catalyst and in that the reaction mixture forming the "single comb-shaped" graft copolymer in a polyol solution is neutralised by an acid.

12. A method according to claim 11, characterised in that the quantity of basic catalyst used is from about 0.1 to about 10% by weight in relation to the weight of the precursor-prepolyol copolymer mixture subjected to the alkoxylation.

13. A method according to either of claims 11 and 12, characterised in that the basic catalyst used is a compound chosen from the group comprising potassium hydroxide, sodium hydroxide, potassium methylate and sodium methylate.

14. A method of preparing a stable polymer-polyol dispersion containing a "double comb-shaped" stabilising graft copolymer, characterised in that it comprises the in situ copolymerisation of at least one unsaturated ethylene monomer chosen from the group comprising isoprene, butadiene, 1,4-pentadiene, styrene, methylstyrene, $\alpha$-methylstyrene, p-tertiobutylstyrene, acrylonitrile, acrylic acid, 2-hydroxyethyl acrylate, 2-hydroxyethyl methacrylate, benzyl and isopropyl acrylate and methacrylate,

24

methacrylo-nitrile, ethyl $\alpha$-ethoxyacrylate, butyl, 2-ethylhexyl and phenyl acrylate and methacrylate, N,N-dimethylacrylamide, N,N-dibenzylacrylamide, N-butyl-acrylamide, vinyl acetate, vinyl alcohol, vinyl butylate, vinyl acrylate and methacrylate, methylvinyl ketone, dimethyl fumarate, dimethyl maleate, maleic acid, fumaric acid, dimethylamino ethyl and glycidyl acrylate and methacrylate, allyl alcohol, vinyl pyridine, vinyl pyrrolidone, vinyl chloride, vinyl bromide and vinylidene chloride, in polyol, in the presence of a "single comb-shaped" prestabilising graft copolymer in solution, as prepared in accordance with any one claims 1 to 14, and of a polymerisation initiator, at a temperature of from 25 to 170°C, the proportion by weight of prestabilising graft copolymer solution being from 1% to 45% in relation to the total weight of unsaturated monomer and polyol, and the proportion by weight of unsaturated ethylene monomer being from 5 to 60% in relation to the total weight of prestabilising graft copolymer solution, of polyol and initiator, the unsaturated monomer being, under the action of the initiator, polymerised to form insoluble particles and being partially grafted on the "single comb-shaped" prestabilising copolymer in the polyol and producing a "double comb-shaped" graft copolymer ensuring the stabilisation of the dispersion thus prepared.

15. A method according to claim 14, characterised in that the proportion by weight of grafted prestabilising copolymer solution is from 5 to 30%.

16. A method according to either of claims 14 and 15, characterised in that the polyol is a polyether-polyol prepared by condensation of propylene oxide and/or ethylene oxide on a polyol, such as glycerine, trimethylolpropane, pentaerythritol, sorbitol, sugar or glycol propylene.

17. A method according to any one of claims 14 to 16, characterised in that the proportion by weight of the unsaturated ethylene monomer is 15 to 50%.

18. A method according to any one of claims 14 and 17, characterised in that the unsaturated ethylene monomer is chosen from the group comprising acrylonitrile, styrene and mixtures of acrylonitrile and styrene.

19. A method according to any one of claims 14 to 18, characterised in that the proportion by weight of initiator is of the order of from 0.1 to 5% in relation to the total weight of unsaturated ethylene monomer, of prestabilising graft copolymer solution and of polyol.

20. A method according to any one of claims 14 to 19, characterised in that the initiator is chosen from the group comprising benzoyl peroxide, 2,2'-azo-bis-isobutyronitrile and mixtures of these compounds.

21. A method according to any one of claims 14 to 20, characterised in that the polymerisation temperature is betwee 80 and 120°C.

22. A method according to any one of claims 14 to 21, characterised in that a chain transfer agent is added during said polymerisation.

23. A method of preparing a polyurethane foam, characterised in that a stable polymer-polyol dispersion, prepared according to any one of claims 14 to 22, is caused to react with water, catalysts, surface-active agents and polyisocyanate.

24. A method according to claim 23, characterised in the water, catalysts and surface-active agents are mixed with the polymer-polyol dispersion before bringing the latter into contact with the polyisocyanate.

**Patentansprüche**

1. Verfahren zur Herstellung eines vorstabilisierten, in "einfacher Kammstruktur" gepfropften Copolymeren in einem Polyol mit einer Molmasse von 3000 bis 7000 gelöst, dadurch gekennzeichnet, daß das Verfahren die Schritte umfaßt:
   in-situ-Copolymerisation einer Mischung von ethylenisch ungesättigten Monomeren, welche mindestens ein einfach ungesättigtes Monomer ohne alkoxylierbare Funktionen, ausgewählt aus der Gruppe, welche Styrol, $\alpha$-Methylstyrol, Methylstyrol, 2,4-Dimethylstyrol, Ethylstyrol, Isopropylstyrol, Butylstyrol, Phenylstyrol, Cyclohexylstyrol, Benzylstyrol, Chlorstyrol, 2,5-Dichlorstyrol, Bromstyrol, Cyanostyrol, Nitrostyrol, N,N-Dimethylaminostyrol, Acetoxystyrol, 4-Vinylbenzoesäuremethylester, Phenoxystyrol, Acrylnitril, Methacrylnitril, Methyl-, Cyclohexyl-, Benzyl-, Isopropyl-, Octyl-acrylat und -methacrylat, α-Chlormethylacrylat, α-Ethoxyethylacrylat,Butyl-, 2-Ethylhexyl-, Phenyl-acrylat und -methacrylat, α-Chloracrylnitril, N,N-Dimethylacrylamid, N,N-Dibenzylacrylamid, Vinylidenchlorid, Vinylbromid, Vinylchlorid, Vinylfluorid, Vinylidenfluorid, Vinylacetat, Vinylchloracetat, Isopropenylacetat, Vinylformiat, Vinylmethoxyacetat, Vinylbenzoat, Methylvinylether, Ethylvinylether, Propylvinylether, Butylvinylether, Phenylvinylether, Methylvinylketon, Vinylpiridin, Ethylvinylketon, Phenylvinylketon, N-Vinylpyrrolidon, Dimethylfumarat und Dimethylmaleat umfaßt, und ein ungesättigtes Monomer mit einer alkoxylierbaren Funktion umfaßt, welches ausgewählt ist aus der Gruppe, welche Allylalkohol, 2-Buten-1,4-diol, 3-Buten-1,2-diol, Glycerin-monoallylether, Trimethylolpropan-monoallylether, Hydroxyethylacrylat, Hydroxyethylmethacrylat, Hydroxypropylacrylat, Hydroxypropylmethacrylat, Glycerin-, Monoethanolamin-, Diethanolamin-, Triethanolamin-monoacrylat und -monomethacrylat, Acrylsäure, Methacrylsäure, Fumarsäure, Methylenbernsteinsäure, Crotonsäure, Maleinanhydrid, Acrylamid, Methacrylamid, N-Butylacrylamid, Glycidylacrylat, Glycidylmethacrylat, Allylglycidylether, Butadienmonoepoxid und Vinylcyclohexan-3,4-epoxid umfaßt, wobei die Mischung pro 100 Mol des einfach ungesättigten Monomeren ohne alkoxylierbare Funktion 1 bis 20 Mole eines ungesättigten Monomers mit alkoxylierbarer Funktion umfaßt, wobei die Copolymerisation in einem Präpolyol mit einer Molmasse kleiner 5000 bei einer Temperatur von 25° C bis 180° C in Gegenwart eines Polymerisationskatalysators durchgeführt wird, wobei der Gewichtsanteil der Mischung der Monomeren 1 bis 75% bezogen auf das Präpolyol beträgt, so daß ein ungesättigter Copolymerpräkursor mit einer alkoxylierbaren Funktion in einem Präpolyol gelöst gebildet wird, und Alkoxylierung des Copolymer-Präkursors und des Präpolyols mittels eines Alkoxylierungsagens, welches aus Ethylenoxid, Propylenoxid oder einer Mischung von Ethylenoxid und Propylenoxid ausgewählt ist, wobei der Gewichtsanteil des Alkoxylierungsagens bezogen auf das Gesamtgewicht der Mischung, welche der Alkoxylierung unterzogen wird, 20 bis 85% beträgt, bei einer Temperatur von 50° C bis 200° C in Gegenwart eines Katalysators.

2. Verfahren nach Anspruch 1, dadurch gekennzeichnet, daß die Mischung der Monomeren mindestens ein Monomer umfaßt, welches eine radikalische Pfropfreaktion begünstigt und ausgewählt ist aus der Gruppe, welche Butadien, Isopren, 1,4-Pentadien, 1,3-Pentadien, 1,4-Hexadien, 1,7-Oktadien, Allylacrylat, Allylmethacrylat, Ethylenglykoldimethacrylat, Diethylenglykol-dimethacrylat, 1,4-Butandiol-dimethacrylat, Divinylbenzol, Divinylether, Divinylsulfid, Divinylsulfon, N,N-Diethylaminoethylacrylat, Vinyllaurat, Vinylisobutyrat, Vinyldodecanat, Vinylhexanoat, Bromstyrole, α- und β-Bromstyrole, Vinylnaphthalin und Vinylanthracen umfaßt, wobei der Anteil des die radikalische Pfropfreaktion begünstigenden Monomers pro 100 Mol des einfach ungesättigten Monomeren ohne alkoxylierbare Funktion 1 bis 25 Mol beträgt.

3. Verfahren nach einem der Ansprüche 1 oder 2, dadurch gekennzeichnet, daß der Gewichtsanteil der Monomerenmischung bezogen auf das Präpolyol 20 bis 60% beträgt.

4. Verfahren nach einem der Ansprüche 1 bis 3, dadurch gekennzeichnet, daß die Molmasse des Präpolyols zwischen 500 und 2000 liegt.

5. Verfahren nach einem der Ansprüche 1 bis 4, dadurch gekennzeichnet, daß die Gewichtsmenge des Polymerisationskatalysators 1 bis 5% beträgt, bezogen auf die ethylenisch ungesättigten Monomeren.

6. Verfahren nach Anspruch 5, dadurch gekennzeichnet, daß der Katalysator aus der Gruppe ausgewählt ist, welche Dibenzoylperoxid, Benzoylhydroperoxid, t-Butylhydroperoxid, t-Butylperoxid, Diisopropylperoxid, Diisopropylbenzolhydroperoxid, Cumolhydroperoxid, 2,2'-Azo-bis-isobutyronitril, 2,2'-Azo-bis-(2,4-dimethylvaleronitril), 2-t-Butylazo-2-cyano-4-methylpentan und 4,4'-Azo-bis-(4-cyano-n-pentanol) umfaßt.

7. Verfahren nach Anspruch 6, dadurch gekennzeichnet, daß der Katalysator Dibenzoylperoxid oder 2,2'-Azo-bis-isobutyronitril ist.

8. Verfahren nach einem der Anprüche 1 bis 7, dadurch gekennzeichnet, daß das vorgenannte Alkoxylierungsagens eine Mischung aus Ethylenoxid und Propylenoxid ist.

9. Verfahren nach Anspruch 8, dadurch gekennzeichnet, daß die Mischung 40 bis 95% Propylenoxid und 5 bis 60% Ethylenoxid umfaßt.

**10.** Verfahren nach einem der Ansprüche 1 bis 9, dadurch gekennzeichnet, daß der Gewichtsanteil des Alkoxylierungsagens 50 bis 75% beträgt.

**11.** Verfahren nach einem der Ansprüche 1 bis 10, dadurch gekennzeichnet, daß man als Alkoxylierungskatalysator einen basischen Katalysator verwendet und daß man die in der Polyol-Lösung aus dem in "einfacher Kammstruktur" gepfropften Copolymer gebildete Reaktionsmischung mit einer Säure neutralisiert.

**12.** Verfahren nach Anspruch 11, dadurch gekennzeichnet, daß die Menge des zu verwendenden basischen Katalysators ungefähr 0,1 bis ungefähr 10 Gew % beträgt, bezogen auf das Gewicht der Mischung aus Copolymer-Präkursor und Präpolyol, welche der Alkoxylierung unterworfen wird.

**13.** Verfahren nach einem der Ansprüche 11 bis 12, dadurch gekennzeichnet, daß man als basischen Katalysator eine Verbindung verwendet, welche ausgewählt ist aus der Gruppe, welche Kaliumhydroxid, Natriumhydroxid, Kaliummethylat und Natriummethylat umfaßt.

**14.** Verfahren zur Herstellung einer stabilen Dispersion von Polymer-Polyol, welche ein stabilisiertes, in "doppelter Kammstruktur" gepfropftes Copolymer enthält, dadurch gekennzeichnet, daß es die Schritte umfaßt:

in-situ-Polymerisation von mindestens einem ethylenisch ungesättigten Monomeren, welches aus der Gruppe ausgewählt ist, welche Isopren, Butadien, 1,4-Pentadien, Styrol, Methylstyrol, $\alpha$-Methylstyrol, p-tert-Butylstyrol, Acrylnitril, Acrylsäure, 2-Hydroxyethylacrylat, 2-Hydroxyethylmethacrylat, Benzyl- und Isopropylacrylat und -methacrylat, Methacrylnitril, Ethyl-$\alpha$-ethoxyacrylat, Butyl-, 2-Ethylhexyl-, Phenyl-acrylat und -methacrylat, N,N-Dimethylacrylamid, N,N-Dibenzylacrylamid, N-Butylacrylamid, Vinylacetat, Vinylalkohol, Vinylbutylat, Vinylacrylat und -methacrylat, Methylvinylketon, Dimethylfumerat, Dimethylmaleat, Maleinsäure, Fumarsäure, Dimethylaminomethyl-, Glycidylacrylat und -mechacrylat, Allylalkohol, Vinylpyridin, Vinylpyrrolidon, Vinylchlorid, Vinylbromid und Vinylidenchlorid umfaßt, in Lösung in dem Polyol in Gegenwart eines vorstabilisierten, in "einfacher Kammstruktur" gepfropften Copolymers, welchletzteres nach einem der Ansprüche 1 bis 14 hergestellt ist, und mit einem Starter für die Polymerisation bei einer Temperatur von 25 bis 170° C, wobei der Gewichtsanteil der Lösung des vorstabilisierten, gepfropften Copolymeren von 1 bis 45% beträgt, bezogen auf das Gesamtgewicht das ungesättigten Monomeren und des Polyols, und wobei der Gewichtsanteil des ethylenisch ungesättigten Monomers 5 bis 60% beträgt, bezogen auf das Gesamtgewicht der Lösung des vorstabilisierten, gepfropften Copolymeren, des Polyols und des Starters, wobei das ungesättigte Monomere in dem Polyol aufgrund der Wirkung des Starters zu unlöslichen Partikeln polymerisiert und teilweise auf das in "einfacher Kammstruktur' vorstabilisierte Copolymere aufgepfropft wird, und wobei ein in "doppelter Kammstruktur" gepfropftes Copolymer hergestellt wird, welches die Stabilisierung der so hergestellten Dispersion sicherstellt.

**15.** Verfahren nach Anspruch 14, dadurch gekennzeichnet, daß der Gewichtsanteil der Lösung des vorstabilisierten, gepfropften Copolymeren 5 bis 30% beträgt.

**16.** Verfahren nach einem der Ansprüche 14 und 15, dadurch gekennzeichnet, daß das Polyol ein Polyetherpolyol ist, welches durch Kondensation von Propylenoxid und/oder Ethylenoxid mit einem Polyol, wie z.B. Glycerin, Trimethylolpropan, Pentaerythrit, Sorbitol, Zucker oder Propylenglykol hergestellt ist.

**17.** Verfahren nach einem der Ansprüche 14 bis 16, dadurch gekennzeichnet, daß der Gewichtsanteil des ethylenisch ungesättigten Monomeren 15 bis 50% beträgt.

**18.** Verfahren nach einem der Ansprüche 14 bis 17, dadurch gekennzeichnet, daß das ethylenisch ungesättigte Monomer aus der Gruppe ausgewählt ist, welche Acrylnitril, Styrol und Mischungen aus Acrylnitril und Styrol umfaßt.

**19.** Verfahren nach einem der Ansprüche 14 bis 18, dadurch gekennzeichnet, daß der Gewichtsanteil des Starters in der Größenordnung von 0,1 bis 5% liegt, bezogen auf das Gesamtgewicht des ethylenisch ungesättigten Monomeren, der Lösung des vorstabilisierten, gepfropften Copolymeren und des Polyols.

**20.** Verfahren nach einem der Ansprüche 14 bis 19, dadurch gekennzeichnet, daß der Starter aus der Gruppe ausgewählt ist, welche Benzoylperoxid, 2,2'-Azo-bis-isobutyronitril und Mischungen dieser Verbindungen umfaßt.

**21.** Verfahren nach einem der Ansprüche 14 bis 20, dadurch gekennzeichnet, daß die Temperatur bei der Polymerisation zwischen 80 und 120°C liegt.

**22.** Verfahren nach einem der Ansprüche 14 bis 21, dadurch gekennzeichnet, daß man vor der vorgenannten Polymerisation ein Kettentransferagens zugibt.

**23.** Verfahren zur Herstellung eines Polyurethanschaums, dadurch gekennzeichnet, daß man eine stabile Dispersion von Polymer-Polyol, welche nach einem der Ansprüche 14 bis 22 hergestellt ist, mit Wasser, Katalysatoren, als Tensiden wirkenden Agentien und einem Polyisocyanat reagieren läßt.

**24.** Verfahren nach Anspruch 23, dadurch gekennzeichnet, daß man das Wasser, die Katalysatoren und die als Tensid wirkenden Agentien mit der Dispersion von Polymer-Polyol vor dem Zusammenbringen des letzteren mit dem Polyisocyanat mischt.